# EUROPEAN PATENT APPLICATION

(11) **EP 4 080 434 A1**
(43) Date of publication of application: **26.10.2022**
(21) Application number: 22169605.7
(22) Date of filing: 23.04.2022
(51) Int. Cl.: G06Q 10/06

(54) **CLOUD COMPUTING-BASED VEHICLE FLEET BENCHMARKING**

(30) Priority: 23.04.2021 CA 3116357
(71) Applicant: Paccar Inc, Bellevue, WA 98004 (US)
(72) Inventor: RAMESH, Mr. Varun, Bellevue, 98004 (US); HERGART, Mr. Carl, Bellevue, 98004 (US); WEBB, Ms. Cynthia Chaffin, Bellevue, 98004 (US); RAMIREZ, Mr. Jorge Rafael Lozada, Bellevue, 98004 (US)
(74) Representative: Calysta NV

(57) **Abstract**

A method comprising: obtaining target operator vehicle configuration data and telemetry data associated with a target operator vehicle fleet; determining, an operator-like-me profile including target operator operation values representing attributes of the target operator vehicle fleet; determining, a subset of operators satisfying criteria associated with the operator-like-me profile; obtaining other operator vehicle configuration data and telemetry data associated with the subset of operators;determining other operator key performance indicator values for the subset of operators based on the vehicle configuration data and telemetry data associated with the subset of operators; benchmarking the target operator vehicle fleet's performance using the other operator key performance indicator values as a baseline; and generating visualizations of the target operator and other operator key performance indicator values and the results of the benchmark.

## Description

### CROSS-REFERENCE TO RELATED APPLICATIONS

This application claims the benefit of priority to U.S. Provisional Application No. 63/015,551, having the title of "CLOUD COMPUTING-BASED VEHICLE FLEET BENCHMARKING" and the filing date of April 25, 2020, which application is hereby incorporated herein by reference in its entirety.

### BACKGROUND

In the heavy-duty trucking industry, a successful selling of a vehicle to an operator is not the end of the deal, but the beginning of a relationship. As is most often the case, every truck operator is, in turn, an organization with unique operations relying on a movement of freight for revenue. Therefore, a successful model for a commercial trucking original equipment manufacturer (OEM) may include robust aftersales support for providing the operator with information for understanding problems with a vehicle that may be unique to the operator's needs. As can be appreciated, giving this high level of attention to every operator may require a large investment of computing resources from the OEM to monitor operator operations and to be able to anticipate problems before they occur.

Moreover, benchmarking is a useful tool for evaluating or checking how a target operator is performing by comparison of the operator's performance metrics against a baseline.

It is with respect to these and other general considerations that embodiments have been described. While relatively specific problems have been discussed, it should be understood that the embodiments should not be limited to solving the specific problems identified in the background.

### SUMMARY

The disclosure generally relates to systems, methods, and computer readable storage media for providing operator fleet performance benchmarking and analytics. A fleet analytics system described herein is designed to be easy to deploy as a lightweight, easy to use cloud-based service to a non-technical audience. Aspects of the fleet analytics system utilize a telematics system to collect and store real-time data from vehicles, a cloud-computing system to provide a service that can be used by various types of users (e.g., operators, dealers, etc.) and that has sufficient complexity to analyze telemetry data and benchmark a target operator, determine analytics associated with the target operator's performance against a baseline, and generate visualizations for communicating the analytics in a clear manner from which the target operator is able to draw technical insights. Currently, since each operator operation is unique, there is a need for a baseline for a given operation to compare a target operator's performance against. For example, by comparing a target operator's performance against a baseline for a given operation, insights and potential problems may be identified, which may enable the target operator to make changes with an aim of increasing an aspect of performance (such as fuel efficiency) and thus be more competitive. According to an aspect, the fleet analytics system may be configured to determine a baseline based on one or more operators who are determined to meet a similarity (to the target operator) threshold according to an analysis of data defining how the target operator operates.

In a first aspect, a system for providing operator fleet performance benchmarking and analytics is provided. In an example embodiment, the system comprises at least one processor, a memory storage device including instructions that when executed by the at least one processor are configured to: obtain target operator vehicle configuration data and telemetry data associated with a target operator vehicle fleet; determine, based on the target operator vehicle configuration data and telemetry data, an operator-like-me profile including target operator operation values representing attributes of the target operator vehicle fleet; determine, based on the target operator operation values, a subset of operators satisfying criteria associated with the operator-like-me profile; obtain other operator vehicle configuration data and telemetry data associated with the subset of operators; anonymize the other operator vehicle configuration data and telemetry data; determine target operator key performance indicator values for the target operator vehicle fleet based on the target operator vehicle configuration data and telemetry data; determine other operator key performance indicator values for the subset of operators based on the vehicle configuration data and telemetry data associated with the subset of operators; benchmark the target operator vehicle fleet's performance using the other operator key performance indicator values as a baseline; and generate visualizations that visually represent the target operator and other operator key performance indicator values and the results of the benchmark.

In another aspect, a method for providing operator fleet performance benchmarking and analytics is provided. In an example embodiment, the method comprises: obtaining target operator vehicle configuration data and telemetry data associated with a target operator vehicle fleet; determining, based on the target operator vehicle configuration data and telemetry data, an operator-like-me profile including target operator operation values representing attributes of the target operator vehicle fleet; determining, based on the target operator operation values, a subset of operators satisfying criteria associated with the operator-like-me profile; obtaining other operator vehicle configuration data and telemetry data associated with the subset of operators; anonymizing the other operator vehicle configuration data and telemetry data; determining target operator key performance indicator values for the target operator vehicle fleet based on the target operator vehicle configuration data and telemetry data; determining other operator key performance indicator values for the subset of operators based on the vehicle configuration data and telemetry data associated with the subset of operators; benchmarking the target operator vehicle fleet's performance using the other operator key performance indicator values as a baseline; and generating visualizations that visually represent the target operator and other operator key performance indicator values and the results of the benchmark.

In another aspect, a computer-readable storage device is provided, the computer-readable storage device including computer readable instructions, which when executed by a processing unit, are configured to: receive a request from a client application to initiate a benchmark a target operator vehicle fleet's performance against a baseline; obtain target operator vehicle configuration data and telemetry data associated with the target operator vehicle fleet; determine, based on the target operator vehicle configuration data and telemetry data, an operator-like-me profile including target operator operation values representing attributes of the target operator vehicle fleet; determine, based on the target operator operation values, a subset of operators satisfying criteria associated with the operator-like-me profile; obtain other operator vehicle configuration data and telemetry data associated with the subset of operators; anonymize the other operator vehicle configuration data and telemetry data; determine target operator key performance indicator values for the target operator vehicle fleet based on the target operator vehicle configuration data and telemetry data; determine other operator key performance indicator values for the subset of operators based on the vehicle configuration data and telemetry data associated with the subset of operators; benchmark the target operator vehicle fleet's performance using the other operator key performance indicator values as the baseline; generate visualizations that visually represent the target operator and other operator key performance indicator values and the results of the benchmark; and provide the visualizations to the client application for display in a graphical user interface.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Non-limiting and non-exhaustive examples are described with reference to the following figures:
**FIGURE 1** is a block diagram of an example environment in which a fleet analytics system of the present disclosure can be implemented according to an embodiment;
**FIGURES 2A** and **2B** are a block diagrams illustrating components of the example fleet analytics system of **FIGURE 1**;
**FIGURE 3** is a flow diagram depicting general stages of an example process for providing operator fleet performance benchmarking and analytics;
**FIGURES 4-8** are illustrations of an example user interface visualizations generated by aspects of the present disclosure; and
**FIGURE 9** is a block diagram illustrating example physical components of a computing device or system with which embodiments may be practiced.

### DETAILED DESCRIPTION

Aspects of the present disclosure are generally directed to systems, methods and computer readable storage media for providing operator fleet performance benchmarking and analytics. The detailed description set forth below in connection with the appended drawings is an illustrative and non-limiting description of various embodiments of the disclosed subject matter. Wherever possible, the same reference numbers are used in the drawings and the following description to refer to the same or similar elements. In the following description, numerous specific details are set forth in order to provide a thorough understanding of illustrative embodiments of the present disclosure. It will be apparent to one skilled in the art, however, that many embodiments of the present disclosure may be practiced without some or all of the specific details. In some instances, well-known process steps have not been described in detail in order not to unnecessarily obscure various aspects of the present disclosure. Further, it will be appreciated that embodiments of the present disclosure may employ any combination of features described herein. The illustrative examples provided herein are not intended to be exhaustive or to limit the claimed subject matter to the precise forms disclosed.

While aspects of the present disclosure may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the present disclosure, but instead, the proper scope of the present disclosure is defined by the appended claims. Examples may take the form of a hardware implementation, or an entirely software implementation, or an implementation combining software and hardware aspects. The following detailed description is, therefore, not to be taken in a limiting sense.

The following description proceeds with reference to examples of systems and methods suitable for use in vehicles, such as Class 8 trucks. Although illustrative embodiments of the present disclosure will be described hereinafter with reference to vehicles, it will be appreciated that aspects of the present disclosure have wide application, and therefore, may be suitable for use with many types of vehicles, such as trucks, passenger vehicles, buses, commercial vehicles, light and medium duty vehicles, etc.

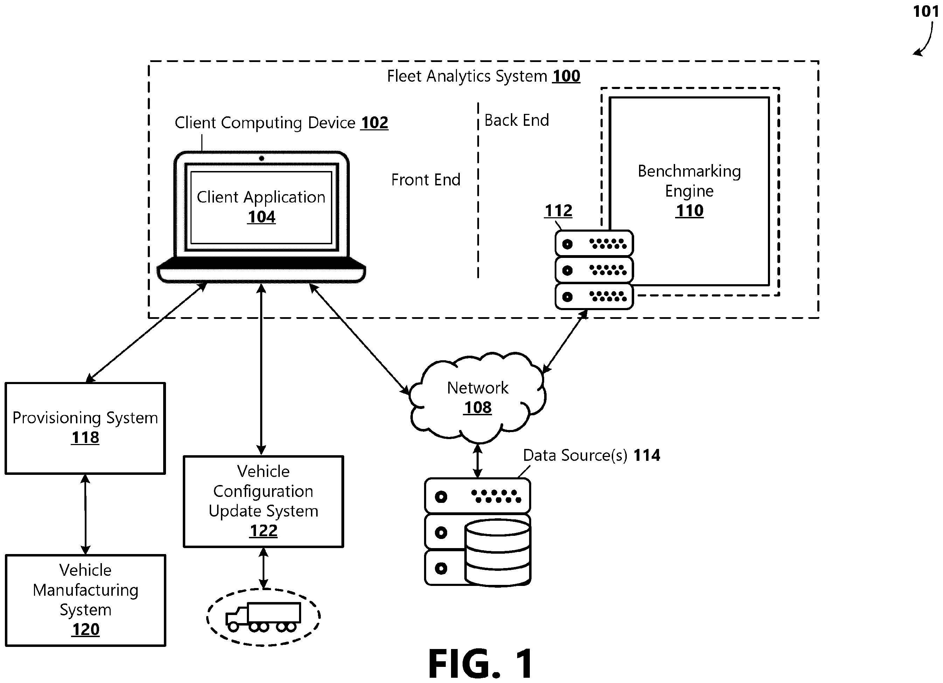

**FIGURE 1** is a block diagram of an example environment **101** in which a fleet analytics system **100** of the present disclosure can be implemented. For example, the example environment **101** may include a client computing device **102**, a network **108**, a plurality of data sources **114**, and one or more servers **112.** Communications between the client computing device **102**, the data sources **114**, and the server(s) **112** are carried out over the network **108** using well-known network communication protocols. For example, the network **108** may be one or a wide area network (e.g., the Internet), a local area network, another type of network, or a combination thereof.

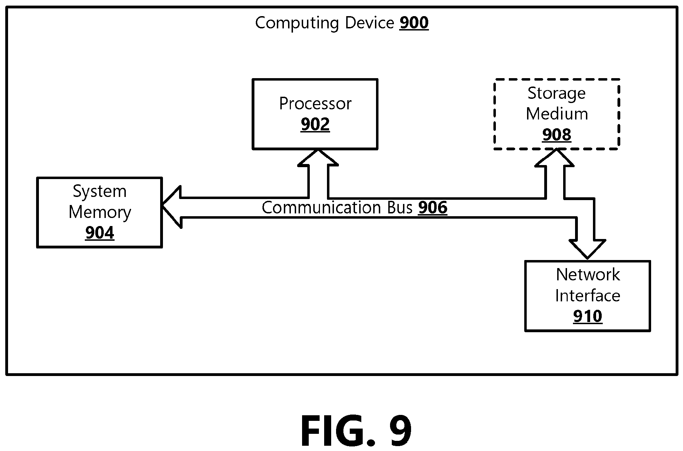

The client computing device **102** may be one or more of various types of computing devices (e.g., a server device, a desktop computer, a tablet computing device, a mobile device, a laptop computer, a laptop/tablet hybrid computing device, a large screen multi-touch display, or other type of computing device) configured to execute instructions for performing a variety of tasks. The hardware of these computing devices is discussed in greater detail in regard to **FIGURE 9****.** The client computing device **102** is shown to include a front-end client application **104.** A user may use the client application **104** to input target operator information and/or obtain target operator information from a data source **114**, and to initiate a request to a benchmarking engine operating on a server **112** for fleet performance benchmarking and analytics against a subset of operators like (e.g., similar to within a threshold) the target operator. For example, the user may be an existing operator of a dealer or manufacturer of vehicles or the dealer or manufacturer, and the fleet analytics system **100** may be used to provide a user-friendly front end client application **104** with which the user may interface, and a back end analytics and visualization system (i.e., the benchmarking engine **110**) that is deployed on the cloud and offered as a service to determine a subset of like operators to utilize as a baseline, to benchmark a target operator's performance against the subset of like operators, determine analytics resulting from the benchmark analysis, and to generate visualizations of the analytics for display to the user/operator.

The client application **104** may be configured to provide requests (e.g., hypertext transfer protocol (HTTP) requests) to data sources **114** and servers **112** for requesting information stored on or accessible to, or determined by the data sources **114** and/or servers **112.** In some examples, the client application **104** is a thick client application that is stored locally on the client computing device **102.** In other examples, the client application **104** is a thin client application (e.g., a web application) that may reside on a remote server and be accessible over the network **108.** For example, a thin client application can be hosted in a browser-controlled environment or coded in a browser-supported language and be reliant on a common web browser executing on the client computing device **102** to render the client application **104** executable on the device.

The data sources **114** may be or include any suitable data source or data storage server, unit or system, including any applicable applications, e.g., database management system (DBMS) applications, attached storage systems and the like. The data sources **114** are configured to execute instructions that provide information to the fleet analytics system **100.** For example, a data source **114** may receive a request for stored data from the client computing device **102** and/or from back end modules of the fleet analytics system **100.**

The server(s) **112** are illustrative of physical or virtual processing systems that are configured to execute instructions that analyze data and provide information to the client computing device **102** and in response to receiving requests from the client computing device **102.** For example, the information may include Web pages, output of executables, raw data, or any other suitable type of information. In accordance with some example embodiments, the server(s) **112** are configured to host respective Web sites, so that the Web sites are accessible to users of the fleet analytics system **100.** The server(s) **112** are shown to include a backend benchmarking engine **110.** The benchmarking engine **110** is illustrative of a software module, system, or device that is operative or configured to determine a subset of operators whose operations are like/similar to a target operator's operations, to benchmark the target operator's performance against the subset of like operators, to determine analytics resulting from the benchmark analysis, and to generate visualizations of the analytics for display to the user/operator.

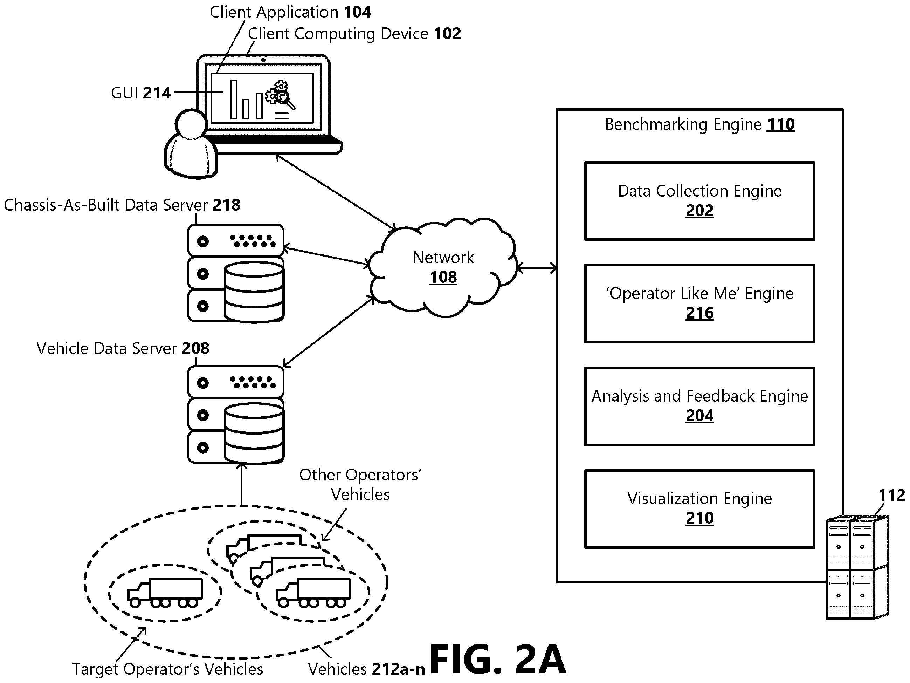

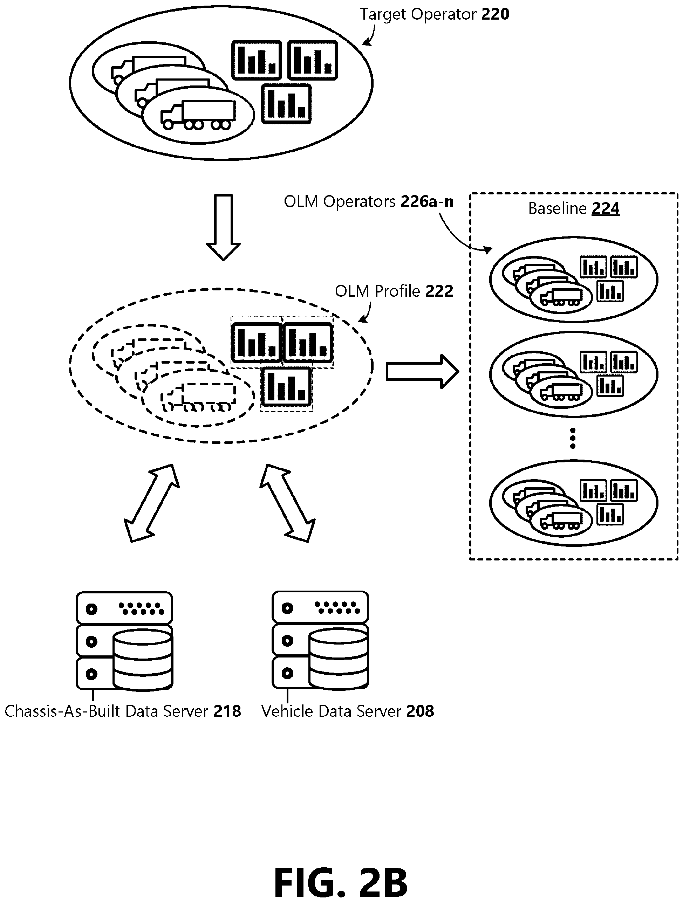

In some examples, the fleet analytics system **100** is operative or configured to determine a vehicle configuration based on the benchmark analysis. For example, a determined vehicle configuration may include powertrain specification options (e.g., engine type, a hardware/software transmission type, and an axle ratio), a software update, or other specification options and technologies that may be provisioned to a new vehicle to be manufactured or to an existing target operator's vehicle. In some examples, example environment **101** may include a provisioning system **118** and a vehicle manufacturing system **120.** For example, the provisioning system **118** is illustrative of a software module, system, or device that is operative or configured to receive a vehicle configuration for a vehicle, as determined by the fleet analytics system **100**, and communicate with the vehicle manufacturing system **120** for initiating manufacture of a new vehicle according to the vehicle configuration. In some examples, the provisioning system **118** may be operative to convert vehicle configuration options corresponding to the vehicle configuration (e.g., powertrain configurations, other vehicle configurations/options) into a format that can be utilized by the vehicle manufacturing system **120** to initiate manufacture of the vehicle. In some examples, the example environment **101** may include a vehicle configuration update system **122.** For example, the vehicle configuration update system **122** is illustrative of a software module, system, or device that is operative or configured to receive a vehicle configuration for a vehicle, as determined by the fleet analytics system **100**, and to automatically apply the vehicle configuration to one or more vehicles, e.g., using one or more over-the-air updates to a computing system of the vehicle to affect the operation of the vehicle. Example techniques for providing operator fleet performance benchmarking and analytics are discussed in greater detail below with reference to **FIGURES 2-8****.**

**FIGURES 2A** **and** **2B** (collectively, **FIGURE 2**) are a block diagram that illustrates components of an example fleet analytics system **100.** A user may use the client application **104** to initiate a request for benchmark analytics from the benchmarking engine **110.** According to examples, the client application **104** may provide a graphical user interface (GUI) **214** that allows the user to initiate the request for benchmark analytics associated with 'like operators' and to view a dashboard comprising analytics resulting from the benchmark analysis and other information, and to otherwise interact with functionalities of the fleet analytics system **100** through manipulation of graphical icons, visual indicators, and the like. As used herein, the term 'like operators' describes operators whose operations are similar to a target operator. For example, operator operations may be determined to be similar to a target operator's operations based on satisfying a set of criteria within a threshold, wherein the criteria include various operator data defining various attributes of the vehicle or fleet of vehicles. In examples, the various attributes may be associated with a vehicle's configuration (e.g., vehicle class, engine family, model), and drive and duty cycles (e.g., maximum speed (miles per hour (MPH)), average speed (MPH), horsepower utilization, cruise control usage (%), average trip distance (miles), load profile, typical route(s) (e.g., geo-location data), vehicle payload).

As part of using the client application **104** to initiate the request for benchmark analytics associated with like operators, the user may input operator information. For example, the operator information may include identifier information for the target operator that can be used to obtain data (e.g., vehicle configuration data and operational data, such as remote diagnostics and/or telemetry data) for the target operator. In some examples, the GUI **214** may include a webpage or an application interface visible to the user (e.g., the operator and/or a dealer). For example, the GUI **214** may be displayed on a screen included in or operatively connected to the client computing device **102.** In some examples, the GUI **214** may be configured to utilize natural interface technologies that enable a user to interact with functions of the fleet analytics system **100** and data provided by the fleet analytics system **100** in a "natural" manner (e.g., methods that may rely on speech recognition, touch and stylus recognition, gesture recognition both on screen and adjacent to the screen, air gestures, head and eye tracking, voice and speech, vision, touch, hover, gestures).

According to an aspect and with reference still to **FIGURE 2A****,** the benchmarking engine **110** may include various components including a data collection engine **202**, an 'operator like me' (OLM) engine **216**, an analysis and feedback engine **204**, and a visualization engine **210.** As should be appreciated, while the various components are shown to be included in a common server **112** (or a common group of servers), the various components (or any respective combinations or portions thereof) may be included in separate servers (or respective groups of servers). The data collection engine **202** is illustrative of a software module, system, or device that is operative or configured to receive data from the client application **104**, such as the request for benchmark analytics associated with like operators and associated operator information, and other data input and selected via the GUI **214**, and to process selections made by the user. In some examples, the operator information comprises operator identifier information that can be used to retrieve various vehicle specification options from a data source **114** embodied as a Chassis-As-Built (CAB) data server **218.** For example, the CAB data server **218** may be a static database configured to store data associated with how a vehicle **212** is configured at the time of build, which may include powertrain specification options (e.g., engine type, a hardware/software transmission type, and an axle ratio) and other specification options and technologies that may be offered for implementation in a vehicle configuration. The data collection engine **202** may be further configured to communicate with the CAB data server **218** for requesting vehicle configuration data for a target operator. In response to a query for vehicle configuration data (e.g., from the data collection engine), the CAB data server **218** may provide the requested vehicle configuration data to the data collection engine **202.** According to an aspect, the data collection engine **202** may be further configured to anonymize the received vehicle configuration data.

The OLM engine **216** is illustrative of a software module, system, or device that is operative or configured to determine, for the target operator, a subset of operators whose operations are like/similar to a target operator's operations based on criteria that define the operations of the target operator. According to an aspect and as illustrated in **FIGURE 2B**, as part of determining the subset of like operators, the OLM engine **216** may be configured to analyze the vehicle configuration data and telematics data associated with the target operator **220** for determining and defining an 'operator like me' virtual operator profile (herein referred to as an OLM profile **222**) representing the target operator **220.** In defining an OLM profile **222**, various operation values may be determined for the OLM profile based on the target operator **220** data, wherein the operation values include values assigned to various criteria that define attributes of the target operator's vehicle's/fleet or vehicles' configuration, drive cycles, and duty cycles. Example, but non-limiting, operation values may include values for vehicle class, vehicle engine family, vehicle model, maximum speed (e.g., miles per hour (MPH), kilometers per hour (KPH)), average speed (e.g., MPH, KPH), horsepower utilization, cruise control usage (%), average trip distance (miles, kilometers), load profile, etc. As should be appreciated, operation values may be determined for and used to represent various other attributes associated with a vehicle **212** or a fleet of vehicles, and these other attributes and associated operation values are within the scope of the present disclosure. According to an aspect, the OLM profile **222** operation values may be used to query one or more data sources **114** (e.g., the CAB data server **218**, a vehicle data server **208**) for identifying a subset of operators who have similar operation values according to a threshold (herein referred to as OLM operators **226a-n** (generally **226**). According to an aspect, the OLM operators **226** may be operative as a baseline against which the target operator **220** can be benchmarked.

In some examples, an OLM profile **222** may be manually-input or manually-configurable by the user. For example, the user may input and/or adjust the OLM profile **222** operation values and threshold values based on the operator's preferences or desires, or to otherwise better represent the target operator **220.** For example, the GUI **214** may include user interface controls that enable the user to input or adjust the OLM profile operation values and threshold values, wherein user inputs associated with adjustments to OLM profile **222** operation values and/or threshold values may be received by the data collector **202** and communicated with the OLM engine **216.** Accordingly, the OLM profile **222** may be created or modified based on the inputs of/adjustments to OLM profile operation values and/or threshold values, and OLM operators **226** may be identified based on the created/modified OLM profile **222.**

In other examples, defining the OLM profile **222** and the identification of clusters of OLM operators **226a-n** may effectively be performed by an unsupervised machine learning algorithm using feature selection and principal component analysis to build the OLM profile operation values and identify clusters of OLM operators **226a-n** for a given target operator **220.** Among other things, the unsupervised machine learning algorithm can determine similarities between operators based on all information available in vehicle data server **208** rather than the discrete variables made available to define an OLM within the client application **104.** As information about the target operator **220** and other operators is continuously received/updated in vehicle data server **208**, such an unsupervised learning algorithm may be run continuously in the background, while visual display of results for a particular target operator **220** may be displayed only when requested.

The vehicle data server **208** may be a real-time database operative or configured to collect and store operational data, such as telematics data, from a population of operators' vehicles **212a-n** (generally **212**). In examples, the operational/telematics data may be retrieved via wireless transmission of such to vehicle data server **208** while the vehicle(s) operate. In some examples, the operational/telematics data may be too large to be conveniently transmitted during operation and may be retrieved via wired, wireless, or other communications means when the vehicle(s) is/are present at a dealer or operator-care site (e.g., by reading such data from disk or other tangible storage means provided in the vehicle(s)). The collected and stored telematics data can include, for example, trip data, faults snapshot data, location and ambient conditions data, drive cycle data (e.g., speed (maximum, average), throttle, idle, power take off (PTO), cruise), various performance variables, fuel consumption data, and other that may be sensed by a vehicle's onboard sensors and sent to, received by, and stored on the vehicle data server **208.** For example, telemetry data and other diagnostics data captured during normal real-world vehicle operation, such as that collected and stored by the vehicle data server **208**, may provide an accurate characterization of vehicle usage and performance, and are therefore advantageous for use in determining how well a vehicle **212** or fleet of vehicles **212** may be performing in comparison against a baseline **224.** Techniques for determining how well a target operator **220** (e.g., target operator's vehicle **212** or fleet of vehicles) may be performing are described below.

The telemetry data may be collected using various technologies, such as via a dedicated onboard vehicle tracking device installed in a vehicle **212** that allows the sending, receiving and/or storing of telemetry data. In some examples, the device may be configured to connect via the vehicle's onboard diagnostics (ODBII), CAN (Controller Area Network) bus port, or other technology with a SIM card, and an onboard modem may enable communication through a wireless network **108.** In some examples, the telemetry data may be transmitted via GPRS (General Packet Radio Service), a mobile data and cellular network, or satellite communication to the vehicle data server **208.** In other examples, the operational/telematics data may be too large to be conveniently transmitted during operation and may be retrieved via wired, wireless, or other communications means when the vehicle(s) is/are present at a dealer or operator-care site (e.g., by reading such data from disk or other tangible storage means provided in the vehicle(s)). In some examples, the vehicle data server **208** may be configured to process and convert the collected telemetry data into a database of telemetry data, where the data are stored and can be accessed by data requesters, such as the benchmarking engine **110** and, in some examples, the client application **104.** As should be appreciated, while the vehicle data server **208** and the CAB data server **218** are shown to be included in separate servers **112** (or respective groups of servers), in other examples, the vehicle data server **208** and the CAB data server **218** may be included in a common server **112.**

In example aspects, the benchmarking engine **110** may use the data collector **202** to query one or more data sources **114**, such as the CAB data server **218** and the vehicle data server **208** for operators having telematics data matching the OLM operation values according to the threshold values. In some examples, the data collector **202** may request a query of telematics data for a specific time period (e.g., current, 2 months, 1 year, 2 years). In some examples, the data collector **202** may use an application programming interface (API) for querying and obtaining telematics data and vehicle configuration data from the vehicle data server **208** and CAB data server **218**, respectively. Query results including telematics data and vehicle configuration data of the OLM operators **226** may be received by the data collector **202**, anonymized, and provided to the analysis and feedback engine 204.

According to an aspect, the analysis and feedback engine **204** is illustrative of a software module, system, or device that is operative or configured to analyze (e.g., perform calculations on) the target operator's **220** telemetry data and the telemetry data of the OLM operators **226** (i.e., subset of operators matching the OLM operation values according to the threshold values) for determining key performance indicators (KPIs) that can be evaluated for determining how the target operator **220** may be performing in comparison against a baseline **224.** In some examples, the KPIs may be evaluated for determining transportation system efficiency. For example, example KPIs that may be indicative of how a target operator **220** (i.e., a target operator's vehicle **212** or fleet of vehicles) may be comparatively performing may include, but are not limited to, fuel economy, software status, uptime, gradeability, acceleration, freight efficiency, maintenance compliance, or other transportation system efficiency attribute metrics. In some examples, KPIs may additionally include performance measurements associated with the driver(s) of the vehicle(s) **212.**

A determination of how a target operator **220** may be comparatively performing may further include benchmarking the KPIs of the target operator **220** against the KPIs determined for the OLM operators **226** and determining benchmarking results including KPI values and associated metrics and differences in KPI values. For example, the differences in values between the KPIs of the target operator **220** and the OLM operators **226** may be indicative of comparative performance, wherein target operator **220** KPI values that are lower than baseline **224** KPI values may indicate lower performance, target operator **220** KPI values that are higher than baseline **224** KPI values may indicate higher performance, and target operator **220** KPI values that are approximate to baseline **224** KPI values may indicate average performance. For example, benchmarking results may be used to identify underperforming vehicles **212**, identify vehicle drivers who may need coaching/instruction, and identify how the target operator **220** compares against other operators in a same category. In examples, the target operator may comprise an owner of a fleet of vehicles, and the comparison to "operators-like-me" may comprise a comparison against an owner of a similar fleet.

In some examples, benchmarking results can be used to determine a vehicle configuration for a target operator vehicle **212** that may increase performance (e.g., improve KPIs) of the vehicle or the operator's fleet. For example, the vehicle configuration may be associated with a vehicle configuration for a new vehicle **212** for a target operator or may be associated with updates to an existing target operator vehicle **212.** The vehicle configuration may be based on a vehicle configuration of an OLM operator **226** that may have KPI values that indicate better performance than a vehicle **212** of the target operator **220.** One example vehicle configuration may include powertrain specification options (e.g., engine type, a hardware/software transmission type, and an axle ratio). Another example vehicle configuration may include a software update via one or more over-the-air updates to a vehicle computing system to affect operation of the vehicle. Other example vehicle configurations may include other specification options and technologies that may be offered for implementation of a new or pre-existing vehicle **212.**

As mentioned above, in some examples, the fleet analytics system **100** may be operative or configured to automatically apply a vehicle configuration. In some examples, a vehicle configuration may be communicated to the provisioning system **118** for initiating manufacture of a vehicle **212** by the vehicle manufacturing system **120** according to the vehicle configuration. In other examples, a vehicle configuration may be communicated to the vehicle configuration update system **122** for automatically applying an update associated with the vehicle configuration (e.g., software update) to an existing target operator vehicle **212** via one or more over-the-air updates to a vehicle computing system to affect operation of the vehicle **212.**

The visualization engine **206** is illustrative of a software module, system, or device that is operative or configured to generate and provide a dashboard UI to the client application **104** to be rendered in a GUI **214** and displayed by the client computing device **102.** For example, the dashboard UI may include various visualizations representing the benchmarking results and anonymized datasets analyzed for determining the benchmarking results. In some examples, to visually represent benchmarking results, the visualization engine **206** may be configured to overlay datasets for visual comparison of value differences and/or relative target operator performance.

The user/operator may be enabled to view the various visualizations and interact with various options that may allow for a selection or determination of OLM operators **226**, a time range of the telematics data, a state or other geographical region in which the telemetry data are taken, whether a visualization is shown on a unique vehicle identifier number (VIN) basis or a model basis, and other options. In some examples, the visualizations may visually indicate how and to what extent a target operator **220** is comparatively performing against a baseline **224** embodied as a subset of like operators (i.e., OLM operators **226**).

In examples, the benchmarking engine **110** may operate on a cloud server **112** that is accessible to the client computing device **102**, and the CAB data server **218** and vehicle data server **208** may operate in a cloud storage environment that is accessible to the benchmarking engine **110.** According to an aspect, the benchmarking engine **110** may be scalable and may be periodically updated by an OEM. For example, the lightweight client application **104** may be instantiated on computing systems of an operator or dealer, and the benchmarking engine **110**, CAB data server **218**, and vehicle data server **208** may be instantiated on computing systems of a vehicle manufacturer, as the telematics and benchmarking analytics systems may be comparatively resource/storage-intensive. Moreover, aspects of the fleet analytics system **100** enable increased computing efficiency by creating the OLM profile **222**, which can be used to identify OLM operators **226** and to compare against OLM operator data in a single step rather than using multiple servers and multiple round-trip data queries to determine target operator performance and associated vehicle configurations.

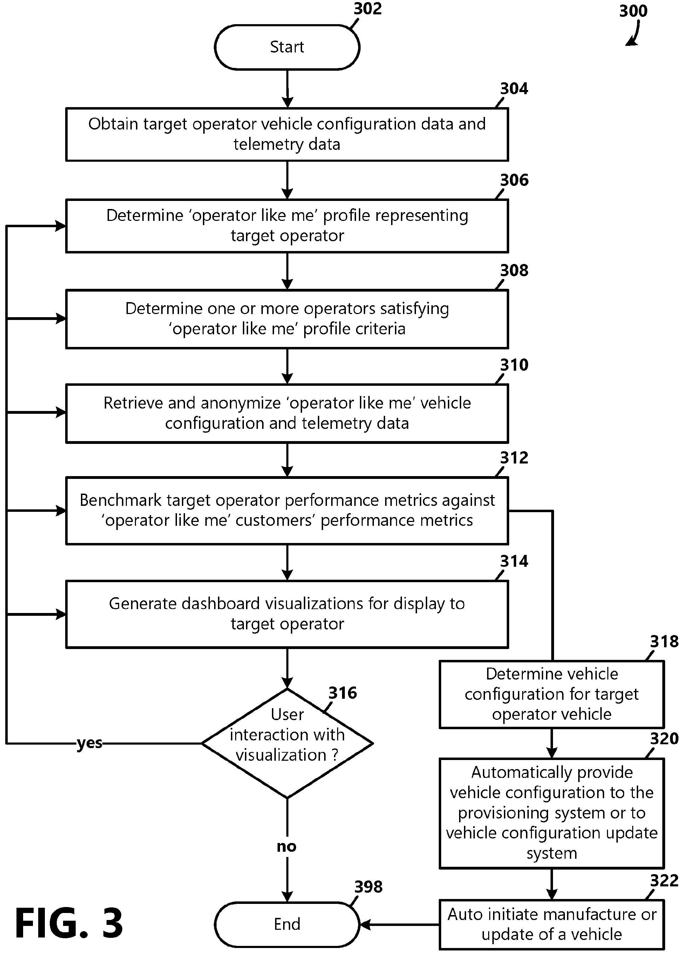

**FIGURE 3** is a flow diagram depicting general stages of an example method **300** for providing operator fleet performance benchmarking and analytics. The method **300** starts at START OPERATION **302**, where a user selection may be made to compare a target operator's performance against a subset of operators with like operations of the target operator, and an indication of the user selection and target operator information may be received. For example, the target operator information may include information about the target operator **220** that can be used to query data sources **114** for related data. The target operator information may be sent from a front-end client application **104** as part of a request for benchmarking and analytics results indicative of the target operator's performance in comparison against a baseline **224** of like operators.

At OPERATION **304**, vehicle configuration data and telemetry data associated with the target operator **220** may be obtained. For example, the benchmarking engine **110** may be configured to query the CAB data server **218** and the vehicle data server **208** for vehicle configuration data and telemetry data, respectively, based on the operator information.

At OPERATION **306**, an OLM profile **222** representing the target operator **220** may be determined. For example, the OLM profile **222** may include various operation values that define the operations of the target operator **220.** The various operation values may be determined for the OLM profile **222** based on the target operator **220** data and may define attributes of the target operator's vehicle/fleet of vehicles configuration, drive cycles, and duty cycles. As discussed, the OLM profile **222** may be configurable/editable using the client application **104** and/or may be determined automatically based on already-stored information relating to an existing operator.

At OPERATION **308**, one or more OLM operators **226** may be determined. For example, the OLM profile **222** operation values may be used to query one or more data sources **114** (e.g., the CAB data server **218**, the vehicle data server **208**) for identifying a subset of operators that have similar operation values according to one or more thresholds. As discussed, the profile criteria and thresholds for OLM operators **226** may be configurable/editable using the client application **104** and/or may be determined automatically. According to an aspect, the OLM operators **226** may be operative as a baseline against which the target operator **220** can be benchmarked.

At OPERATION **310**, vehicle configuration data and telemetry data associated with the subset of operators (i.e., OLM operators **226**) may be retrieved and anonymized. For example, the OLM operator **226** configuration data and telemetry data may be requested from and provided by the CAB data server **218** and vehicle data server **208**, respectively.

At OPERATION **312**, the target operator's **220** telemetry data and the telemetry data of the OLM operators **226** (i.e., subset of operator matching the OLM operation values according to the threshold values) may be analyzed for determining key performance indicators (KPIs) that can be evaluated for determining how the target operator **220** may be performing in comparison against a baseline **224.** OPERATION **312** may further include benchmarking the target operator's KPIs against the OLM operators' KPIs and determining benchmarking results including differences in values between the KPIs of the target operator **220** and the OLM operators **226.** As described above, the differences in values may be indicative of comparative performance, wherein target operator **220** KPI values that are lower than baseline **224** KPI values may indicate lower performance, target operator **220** KPI values that are higher than baseline **224** KPI values may indicate higher performance, and target operator **220** KPI values that are approximate to baseline **224** KPI values may indicate average performance. As discussed, the KPI values may be configurable/editable using the client application **104** to generate performance visualizations based on different criteria.

In some examples, one or more of OPERATIONS **306**, **308**, **310**, and **312** can be collapsed and performed by an unsupervised learning algorithm. For example, the OLM profile **222** and the identification of clusters of OLM operators **226a-n** may effectively be performed by an unsupervised machine learning algorithm using feature selection and principal component analysis to build the OLM profile operation values and identify clusters of OLM operators **226a-n** for a given target operator **220.** Among other things, the unsupervised machine learning algorithm can determine similarities between operators based on all information available in vehicle data server **208** rather than the discrete variables made available to define an OLM within the client application **104.** As information about the target operator **220** and other operators is continuously received/updated in vehicle data server **208**, such an unsupervised learning algorithm may be run continuously in the background, while visual display of results for a particular target operator **220** may be displayed only when requested.

At OPERATION **314**, various visualizations representing the benchmarking results and anonymized data analyzed for determining the benchmarking results may be generated and included in a dashboard UI that may be provided to the client application **104** and displayed to the user/operator. For example, the various visualizations may represent the relative performance of the target operator **220** with respect to various transportation system efficiency determinants. Accordingly, based on the visualizations and data, the target operator **220** may be enabled to identify, in real-time or near real-time, insightful and actionable information that the target operator can make modifications for improving transportation system efficiency. For example, the visualizations and data may indicate underperforming vehicles **212**, vehicle drivers who may need coaching/instruction, how the target operator **220** compares against other operators in a same category, and other insightful and actionable information.

At DECISION OPERATION **316**, a determination may be made as to whether an indication of a user interaction with a visualization or data included in the dashboard UI is received. For example, various UI options may be included in the GUI **214** that enable the user to interact with various functions provided by the benchmarking engine **110.** For example, the UI options may allow for a selection of OLM operators **226**, a time range of the telematics data, a state or other geographical region in which the telemetry data are taken, whether a visualization is shown on a unique vehicle identifier number (VIN) basis or a model basis, and other options. If a user selection of a UI option is made, the method **300** may return to: OPERATION **306**, where, based on the user selections, the OLM profile **222** may be redefined, and/or to OPERATION **308**, where, based on the user selections, another subset of operators may be determined as OLM operators **226**; and/or to OPERATION **310**, where, based on the user selections, other telemetry data and vehicle configuration data may be retrieved; and/or to OPERATION **312**, where, based on the user selections, the target operator's KPIs may be reevaluated against the OLM operators' KPIs and updated benchmark results may be determined; and/or to OPERATION **314**, where, based on the user selections, dashboard visualizations may be updated to correspond with the user selections and/or updated benchmark results. If a user selection of a UI option is made, the method **300** may end at END OPERATION **398.**

In some examples, the method **300** may proceed from OPERATION **312** to OPERATION **318**, where a vehicle configuration for a target operator vehicle **212** may be determined based on benchmarking results. For example, based on a comparison of the target operator's KPIs against the OLM operators' KPIs, a vehicle configuration for the target operator vehicle **212** that may increase the target operator's KPI values may be determined. In one example, powertrain specification options (e.g., engine type, a hardware/software transmission type, and an axle ratio) of an OLM operator's vehicle **212** with KPI values that are higher than the target operator's KPI values may be determined as a vehicle configuration for the target operator **220.** In another example, a determination that a target operator vehicle **212** does not have a latest software update may be used to determine a software update to automatically apply to the target operator vehicle **212.**

At OPERATION **320**, the vehicle configuration may be automatically provided to the provisioning system **118** or to the vehicle configuration update system **122**, and at OPERATION **322**, the manufacture or update of a target operator vehicle **212** may be automatically initiated according to the vehicle configuration. For example, the vehicle manufacturing system **120** or the vehicle configuration update system **122** may use the vehicle configuration to manufacture or update a vehicle **212** that is determined to positively impact the performance of the target operator. In examples, the manufacture or update of the vehicle **212** may be fully automated based on the vehicle configuration. The method **300** may end at OPERATION **398.**

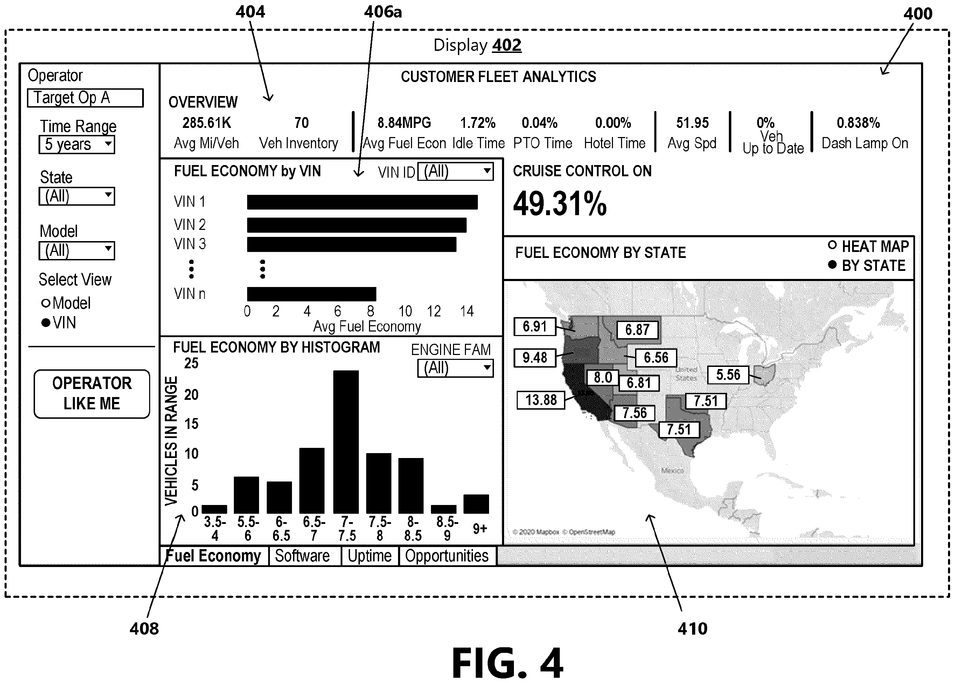

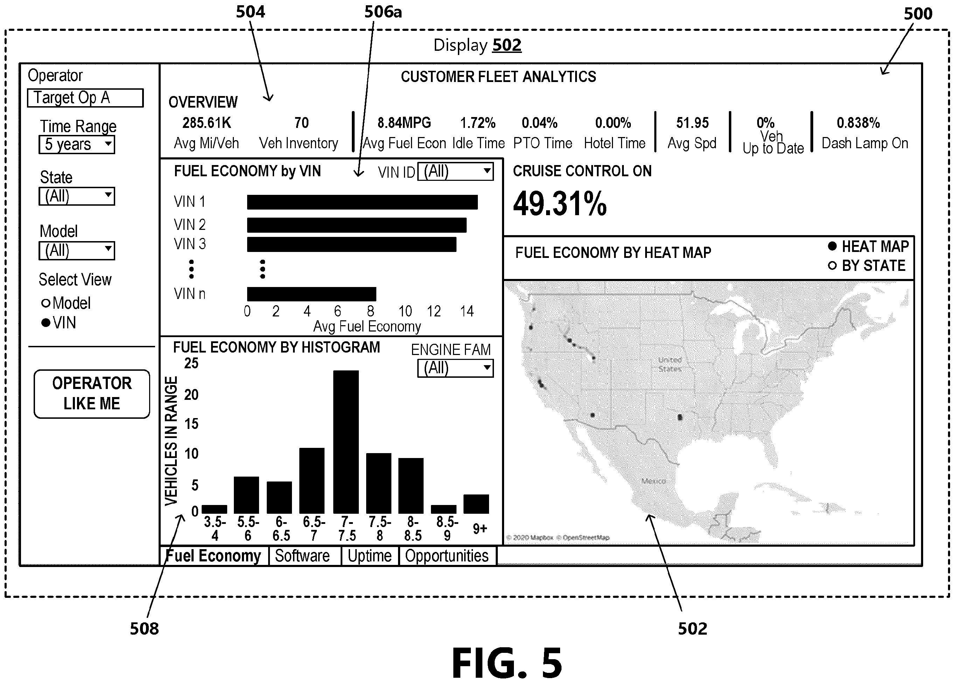

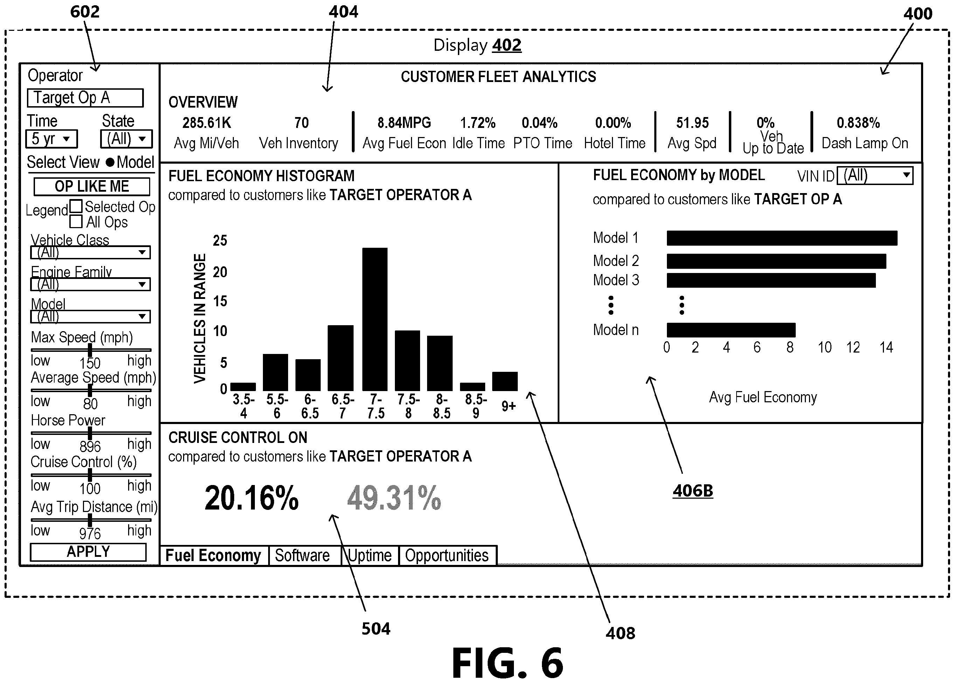

**FIGURES 4-8** are illustrations of an example dashboard UIs **400** that may be generated and displayed on a display **402** to a user/target operator **220.** In some examples and as shown in **FIGURES 4-8**, the example dashboard UI **400** may include overview metrics **404** associated with an overall health of an operator's fleet of vehicles **212.** In some examples and as shown in **FIGURES 4**, **5**, and **6**, the example dashboard UI **400** may include a KPI by VIN/model visualization **406.** For example, the KPI which the example visualization **406** may represent is fuel economy. In other examples, another KPI (e.g., software, uptime, other KPI) may be represented. In some examples, a visualization may be toggled between a VIN-based or model-based visualization. The KPI by VIN visualization **406a** (**FIGURES 4** and **5**) shows a listing of target operator vehicle VINs and a visual representation of the average KPI dataset determined for each vehicle **212.** The KPI by model visualization **406b** (**FIGURE 6**) shows a listing of models and a visual representation of the average KPI determined for each vehicle model type of the operator's vehicle fleet. In some examples and as shown in **FIGURES 4**, **55**, and **6**, the example dashboard UI **400** may include a KPI histogram visualization **408** used to visually represent a distribution of an average KPI determined per vehicle **212** across an operator's vehicle fleet. In some examples and as shown in **FIGURE 4**, the example dashboard UI **400** may include a KPI map visualization **410** used to visually represent an average KPI determined across all vehicles **212** in an operator's fleet driven through a given state during a selected time period. In some examples and as shown in **FIGURE 5**, the example dashboard UI **400** may include a KPI heat map visualization **502** using a heat map to visually represent a geographic region of where the operator operates. For example, darker regions or regions of a particular color may indicate more miles accumulated in that given region. In some examples and as shown in **FIGURES 5** and **6**, the example dashboard UI **400** may include cruise control metrics **504** associated with a percentage of the time cruise control is used. As should be appreciated, each of the example visualizations and metrics **404, 406, 408, 410, 502, 504** can visually represent other KPIs and can visually represent the same or other KPIs of the target operator **220** and/or of OLM operators **226.** Additionally, other types of visualizations may be used to represent the KPIs and datasets.

In some examples and as shown in **FIGURE 6**, a user selection to benchmark a target operator's performance against a baseline **224** for a KPI metric may result in a visual display of benchmark results. In some examples, a filter panel **602** may be included in the dashboard UI **400** where various filters for defining an OLM profile **222** and an associated operation value dataset. For example, UI tools may be provided for adjusting one or more operation values, such as values for vehicle class, vehicle engine family, vehicle model, maximum speed (miles per hour (MPH)), average speed (MPH), horsepower utilization, cruise control usage (%), average trip distance (miles), load profile, etc. In some examples and as shown in **FIGURE 6**, a KPI histogram **408** may visually represent a distribution of a KPI per vehicle **212** for OLM operators **226** associated with a target operator **220.** In some examples and as shown in **FIGURE 6**, a KPI by model visualization **406b** may include a visual representation of a distribution of an average KPI per model type for the target operator **220** compared to (e.g., overlaid on) a visual representation of a distribution of an average KPI per model of OLM operators **226.**

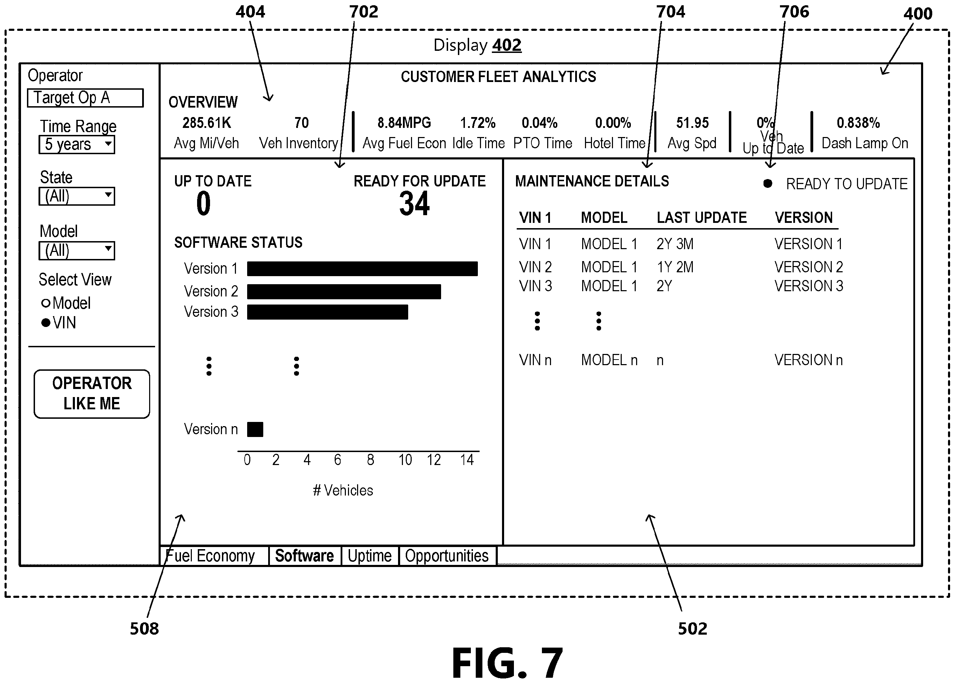

In some examples and as shown in **FIGURE 7**, the example dashboard UI **400** may include software status KPI visualizations. For example, example software status KPI visualizations may include: a KPI histogram **702** to visually represent a distribution of software levels/versions for an operator's fleet of vehicles **212**; a table **704** to visually represent, by VIN, each vehicle's current software level, when it was last updated, and whether it is a latest update; and an indicator **706** (e.g., shading, color, icon) to visually represent vehicles **212** that may need to be updated to new software.

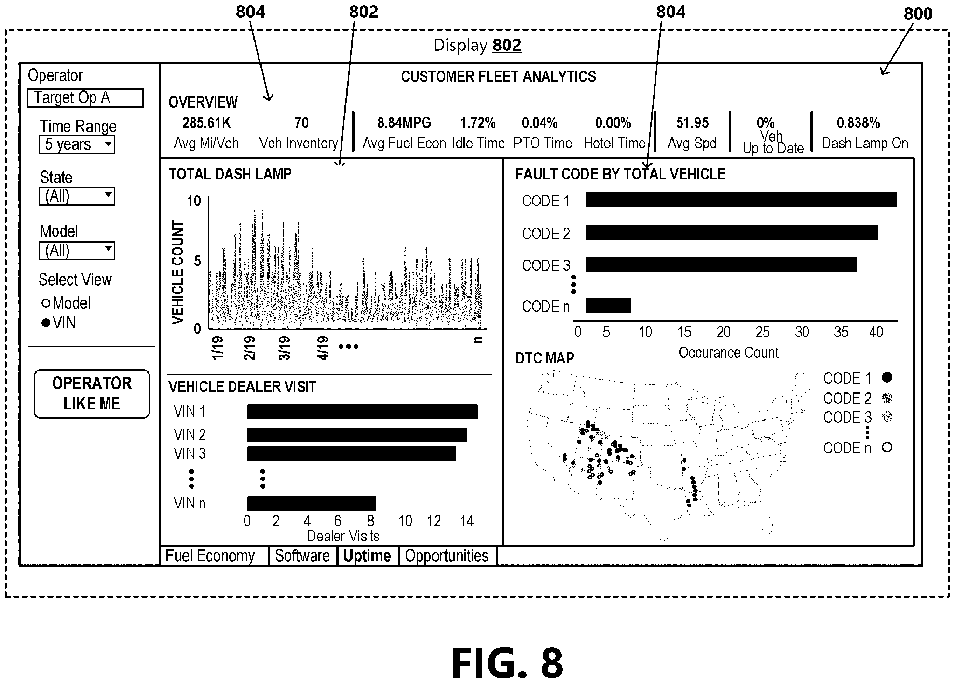

In some examples and as shown in **FIGURE 8**, the example dashboard UI **400** may include uptime KPI visualizations for an operator's fleet. For example, example uptime KPI visualizations may include: a time series dash lamp plot **802** to visually represent a time-based visualization of a number of vehicles **212** that had a maintenance-related issue on the vehicle at a given time as represented by dash lamp data; a fault code histogram **804** to visually represent a distribution of unique fault codes related to maintenance issues; and a dealer visit visualization **806**, such as a bar chart, to visually represent a number of dealer visits for each vehicle **212** by VIN, wherein vehicles with higher dealer visit numbers may indicate persistent issues with the vehicle. As should be appreciated, the above example UIs are intended to be exemplary and not limiting. Other types and configurations of visualizations are possible and are within the scope of the present disclosure.

**FIGURE 9** is a block diagram of an illustrative computing device **900** appropriate for use in accordance with embodiments of the present disclosure. The description below is applicable to servers, personal computers, mobile phones, smart phones, tablet computers, embedded computing devices, and other currently available or yet-to-be-developed devices that may be used in accordance with embodiments of the present disclosure.

In its most basic configuration, the computing device **900** includes at least one processor **902** and a system memory **904** connected by a communication bus **906.** Depending on the exact configuration and type of device, the system memory **904** may be volatile or nonvolatile memory, such as read-only memory ("ROM"), random access memory ("RAM"), EEPROM, flash memory, or other memory technology. Those of ordinary skill in the art and others will recognize that system memory **904** typically stores data or program modules that are immediately accessible to or currently being operated on by the processor **902.** In this regard, the processor **902** may serve as a computational center of the computing device **900** by supporting the execution of instructions.

As further illustrated in **FIGURE 9**, the computing device **900** may include a network interface **910** comprising one or more components for communicating with other devices over a network. Embodiments of the present disclosure may access basic services that utilize the network interface **910** to perform communications using common network protocols. The network interface **910** may also include a wireless network interface configured to communicate via one or more wireless communication protocols, such as WiFi, 2G, 3G, 4G, LTE, WiMAX, Bluetooth, or the like.

In the illustrative embodiment depicted in **FIGURE 9****,** the computing device **900** also includes a storage medium **908.** However, services may be accessed using a computing device that does not include means for persisting data to a local storage medium. Therefore, the storage medium **908** depicted in **FIGURE 9** is optional. In any event, the storage medium **908** may be volatile or nonvolatile, removable or non-removable, implemented using any technology capable of storing information such as, but not limited to, a hard drive, solid state drive, CD-ROM, DVD, or other disk storage, magnetic tape, magnetic disk storage, or the like.

As used herein, the term "computer-readable medium" includes volatile and nonvolatile and removable and non-removable media implemented in any method or technology capable of storing information, such as computer-readable instructions, data structures, program modules, or other data. In this regard, the system memory **904** and storage medium **908** depicted in **FIGURE 9** are examples of computer-readable media.

For ease of illustration and because it is not important for an understanding of the claimed subject matter, **FIGURE 9** does not show some of the typical components of many computing devices. In this regard, the computing device **900** may include input devices, such as a keyboard, keypad, mouse, trackball, microphone, video camera, touchpad, touchscreen, electronic pen, stylus, or the like. Such input devices may be coupled to the computing device **900** by wired or wireless connections including RF, infrared, serial, parallel, Bluetooth, USB, or other suitable connection protocols using wireless or physical connections.

In any of the described examples, data can be captured by input devices and transmitted or stored for future processing. The processing may include encoding data streams, which can be subsequently decoded for presentation by output devices. Media data can be captured by multimedia input devices and stored by saving media data streams as files on a computer-readable storage medium (e.g., in memory or persistent storage on a client device, server, administrator device, or some other device). Input devices can be separate from and communicatively coupled to computing device **900** (e.g., a client device), or can be integral components of the computing device **900.** In some embodiments, multiple input devices may be combined into a single, multifunction input device (e.g., a video camera with an integrated microphone). The computing device **900** may also include output devices such as a display, speakers, printer, etc. The output devices may include video output devices such as a display or touchscreen. The output devices also may include audio output devices such as external speakers or earphones. The output devices can be separate from and communicatively coupled to the computing device **900**, or can be integral components of the computing device **900.** Input functionality and output functionality may be integrated into the same input/output device (e.g., a touchscreen). Any suitable input device, output device, or combined input/output device either currently known or developed in the future may be used with described systems.

In general, functionality of computing devices described herein may be implemented in computing logic embodied in hardware or software instructions, which can be written in a programming language, such as C, C++, COBOL, JAVA^{™}, PHP, Perl, HTML, CSS, JavaScript, VBScript, ASPX, Microsoft .NET^{™} languages such as C#, or the like. Computing logic may be compiled into executable programs or written in interpreted programming languages. Generally, functionality described herein can be implemented as logic modules that can be duplicated to provide greater processing capability, merged with other modules, or divided into sub-modules. The computing logic can be stored in any type of computer-readable medium (e.g., a non-transitory medium such as a memory or storage medium) or computer storage device and be stored on and executed by one or more general-purpose or special-purpose processors, thus creating a special-purpose computing device configured to provide functionality described herein.

Many alternatives to the systems and devices described herein are possible. For example, individual modules or subsystems can be separated into additional modules or subsystems or combined into fewer modules or subsystems. As another example, modules or subsystems can be omitted or supplemented with other modules or subsystems. As another example, functions that are indicated as being performed by a particular device, module, or subsystem may instead be performed by one or more other devices, modules, or subsystems. Although some examples in the present disclosure include descriptions of devices comprising specific hardware components in specific arrangements, techniques and tools described herein can be modified to accommodate different hardware components, combinations, or arrangements. Further, although some examples in the present disclosure include descriptions of specific usage scenarios, techniques and tools described herein can be modified to accommodate different usage scenarios. Functionality that is described as being implemented in software can instead be implemented in hardware, or vice versa.

Many alternatives to the techniques described herein are possible. For example, processing stages in the various techniques can be separated into additional stages or combined into fewer stages. As another example, processing stages in the various techniques can be omitted or supplemented with other techniques or processing stages. As another example, processing stages that are described as occurring in a particular order can instead occur in a different order. As another example, processing stages that are described as being performed in a series of steps may instead be handled in a parallel fashion, with multiple modules or software processes concurrently handling one or more of the illustrated processing stages. As another example, processing stages that are indicated as being performed by a particular device or module may instead be performed by one or more other devices or modules.

The principles, representative embodiments, and modes of operation of the present disclosure have been described in the foregoing description. However, aspects of the present disclosure which are intended to be protected are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present disclosure. Accordingly, it is expressly intended that all such variations, changes, and equivalents fall within the spirit and scope of the claimed subject matter.

## Claims

1. A system for providing operator fleet performance benchmarking and analytics, the system comprising:
at least one processor **902**;
a memory storage device **904** including instructions that when executed by the at least one processor are configured to:
obtain target operator vehicle configuration data and telemetry data associated with a target operator vehicle fleet **212**;
determine, based on the target operator vehicle configuration data and telemetry data, an operator-like-me profile **222** including target operator operation values representing attributes of the target operator vehicle fleet;
determine, based on the target operator operation values, a subset of operators **226** satisfying criteria associated with the operator-like-me profile;
obtain other operator vehicle configuration data and telemetry data associated with the subset of operators;
anonymize the other operator vehicle configuration data and telemetry data;
determine target operator key performance indicator values for the target operator vehicle fleet based on the target operator vehicle configuration data and telemetry data;
determine other operator key performance indicator values for the subset of operators based on the vehicle configuration data and telemetry data associated with the subset of operators;
benchmark the target operator vehicle fleet's performance using the other operator key performance indicator values as a baseline **224**; and
generate visualizations **404**, **406**, **408**, **410**, **502**, **504** that visually represent the target operator and other operator key performance indicator values and the results of the benchmark.

2. The system of claim 1, wherein in determining the subset of operators satisfying criteria associated with the operator-like-me profile, the system is configured to, for each operator included in the subset of operators:
determine other operator operation values representing attributes of the operator vehicle fleet; and
determine the operator operation values are similar to the target operator operation values according to a threshold.

3. The system of claim 2, wherein the system comprises a machine learning algorithm trained to determine the operator-like-me profile.

4. The system of claim 2, wherein the system comprises a machine learning algorithm trained to determine the subset of operators satisfying criteria associated with the operator-like-me profile.

5. The system of claim 2, wherein the target operator and the other operator operation values include values representing attributes of at least one of:
vehicle configuration;
drive cycles; and
duty cycles.

6. The system of claim 1, wherein the target operator and the other operator key performance indicator values include transportation system efficiency determinant values.

7. The system of claim 1, wherein the system is further configured to:
Receive **302** a request from a client application **104** to initiate the benchmark; and
provide **314** the visualizations visually representing the results of the benchmark to the client application for display in a graphical user interface **400.**

8. The system of claim 1, wherein the visualizations include at least one of:
overview metrics associated with an overall health of the target operator vehicle fleet **404**;
fuel economy by vehicle identification number (VIN) or vehicle model **406**;
a fuel economy histogram representing a distribution of average fuel economy per vehicle across the target operator vehicle fleet **408**;
a fuel economy map representing average fuel economy measured across the target operator vehicle fleet **410**;
a fuel economy heat map representing locations where the target operator vehicle fleet operates **502**; and
cruise control usage metrics **504.**

9. A method **300** for providing operator fleet performance benchmarking and analytics, comprising:
obtaining **304** target operator vehicle configuration data and telemetry data associated with a target operator vehicle fleet **212**;
determining **306**, based on the target operator vehicle configuration data and telemetry data, an operator-like-me profile **222** including target operator operation values representing attributes of the target operator vehicle fleet;
determining **308**, based on the target operator operation values, a subset of operators **226** satisfying criteria associated with the operator-like-me profile;
obtaining **310** other operator vehicle configuration data and telemetry data associated with the subset of operators;
anonymizing **310** the other operator vehicle configuration data and telemetry data;
determining **312** target operator key performance indicator values for the target operator vehicle fleet based on the target operator vehicle configuration data and telemetry data;
determining **312** other operator key performance indicator values for the subset of operators based on the vehicle configuration data and telemetry data associated with the subset of operators;
benchmarking **312** the target operator vehicle fleet's performance using the other operator key performance indicator values as a baseline **224**; and
generating **314** visualizations **404**, **406**, **408**, **410**, **502**, **504** that visually represent the target operator and other operator key performance indicator values and the results of the benchmark.

10. The method of claim 9, wherein determining the subset of operators satisfying criteria associated with the operator-like-me profile comprises, for each operator included in the subset of operators:
determining other operator operation values representing attributes of the operator vehicle fleet; and
determining the operator operation values are similar to the target operator operation values according to a threshold.

11. The method of claim 9, wherein determining the target operator key performance indicator values and the other operator key performance indicator values include determining transportation system efficiency determinant values.

12. The method of claim 9, further comprising:
determining a vehicle configuration for a target operator vehicle based on the results of the benchmark; and
automatically providing **318** the selected vehicle configuration to a provisioning system to initiate manufacture of the target operator vehicle based on the vehicle configuration; or
automatically providing **320** the selected vehicle configuration to a vehicle configuration update system to update **322** the target operator vehicle based on the vehicle configuration.

13. The method of claim 9, further comprising:
receiving **302** a request from a client application **104** to initiate the benchmark; and
providing **314** the visualizations visually representing the results of the benchmark to the client application for display in a graphical user interface.

14. The method of claim 9, further comprising receiving **316** one or more target operator selections from the client application adjusting one or more target operator operation values.

15. A computer readable storage device **904** configured to store computer readable instructions, which when executed by a processor **902**, are configured to:
receive a request from a client application **104** to initiate a benchmark a target operator vehicle fleet's performance against a baseline **224**;
obtain **304** target operator vehicle configuration data and telemetry data associated with the target operator vehicle fleet **212**;
determine **306**, based on the target operator vehicle configuration data and telemetry data, an operator-like-me profile **222** including target operator operation values representing attributes of the target operator vehicle fleet;
determine **308**, based on the target operator operation values, a subset of operators **226** satisfying criteria associated with the operator-like-me profile;
obtain **310** other operator vehicle configuration data and telemetry data associated with the subset of operators;
anonymize **310** the other operator vehicle configuration data and telemetry data;
determine **312** target operator key performance indicator values for the target operator vehicle fleet based on the target operator vehicle configuration data and telemetry data;
determine **312** other operator key performance indicator values for the subset of operators based on the vehicle configuration data and telemetry data associated with the subset of operators;
benchmark **312** the target operator vehicle fleet's performance using the other operator key performance indicator values as the baseline;
generate **314** visualizations that visually represent the target operator and other operator key performance indicator values and the results of the benchmark; and
provide **314** the visualizations to the client application for display in a graphical user interface **400.**
